# EUROPÄISCHE PATENTSCHRIFT

(11) **EP 3 353 099 B1**
(45) Veröffentlichungstag und Bekanntmachung des Hinweises auf die Patenterteilung: **19.02.2020**
(21) Anmeldenummer: 16759729.3
(22) Anmeldetag: 29.08.2016
(51) Int. Cl.: B65G 21/20

(54) **VORRICHTUNG SOWIE VERFAHREN ZUR SEITLICHEN FÜHRUNG VON BEHÄLTERN**
DEVICE AND METHOD FOR LATERALLY GUIDING CONTAINERS
DISPOSITIF ET PROCÉDÉ DE GUIDAGE LATÉRAL DE CONTENANTS

(30) Priorität: 21.09.2015 DE 102015115906
(43) Veröffentlichungstag der Anmeldung: 01.08.2018
(73) Patentinhaber: KHS GmbH, 44143 Dortmund (DE)
(72) Erfinder: PIETERS, Sebastian, 47533 Kleve (DE)
(86) Internationale Anmeldenummer: PCT/EP2016/070297
(87) Internationale Veröffentlichungsnummer: WO 2017/050526

(56) Entgegenhaltungen:
- WO-A1-2012/076659
- WO-A1-2014/196862
- KR-B1- 101 380 231
- US-A- 4 479 582

## Beschreibung

Die Erfindung bezieht sich auf eine Vorrichtung zur Führung von Behältern. Gattungsgemäße Behälterbehandlungseinrichtungen sind hinlänglich bekannt. Insbesondere ist aus der Druckschrift DE 10 2012 100 810 B4 eine Vorrichtung zur Bildung von Verpackungseinheiten bekannt, bei der die Behälter zunächst durch ein oder mehrere Behälterbehandlungsmodule geführt und anschließend an eine Gruppierungseinrichtung übergeben werden, in der die Gruppierung mehrerer Behälter abhängig von der gewünschten Gebindegröße erfolgt. Die Förderung der Behälter durch das zumindest eine Behälterbehandlungsmodul erfolgt dabei auf einer kreissegmentförmigen Transportbahn, wohingegen die Förderung durch die Gruppierungseinrichtung auf einer linearen Transportbahn erfolgt. Die Überleitung zwischen dem Behälterbehandlungsmodul und der Gruppierungseinrichtung wird mittels eines Transportelements vollzogen, das in Zusammenwirken mit einem Geländer die Behälter in Richtung der Gruppierungseinrichtung weiterleitet. Nachteilig an der bekannten Behälterbehandlungseinrichtung ist, dass durch die Führung mittels eines Geländers keine lagestabile Übergabe möglich ist. Dies ist insbesondere dann nachteilig, wenn eine verdrehungsfreie (d.h. keine Verdrehung des Behälters um die Behälterhochachse) Übergabe der Behälter zur Gruppierungseinrichtung hin notwendig ist, so dass beispielsweise bestimmte Behältermerkmale (z.B. Embossings, Aufdrucke oder Etikettenbereiche) oder auch Klebemittelaufträge zur Herstellung von Klebeverbindungen zwischen den Behältern in dem zu erstellenden Behältergebinde eine bestimmte Lage haben sollen. WO 2014/196862 A1 beschreibt eine Vorrichtung nach dem Oberbegriff des Anspruchs 1.

Ausgehend hiervon ist es Aufgabe der Erfindung, eine Vorrichtung zur Führung von Behältern anzugeben, die eine lagestabile Übergabe von Behältern, insbesondere ohne oder im Wesentlichen ohne Verdrehen der Behälter um deren Behälterhochachse ermöglicht.

Die Aufgabe wird ausgehend vom Oberbegriff des unabhängigen Patentanspruchs 1 durch dessen kennzeichnende Merkmale gelöst.

Die Erfindung bezieht sich auf eine Vorrichtung zur Führung von Behältern entlang einer bogenförmigen Behältertransportstrecke. Die Vorrichtung weist einen konkav geformten, d.h. nach innen gewölbten Führungsbereich auf, im Bereich dessen die Behälter seitlich geführt werden. Beispielsweise liegt diesem Führungsbereich ein umlaufend angetriebenes Transportelement gegenüber, mittels dem die Behälter im Zusammenwirken mit der Führungsvorrichtung in Transportrichtung weiterbewegt werden. Im Bereich des konkav geformten Führungsbereichs ist ein Führungsband vorgesehen, das einen Anlagebereich für die Behälter in diesem Führungsbereich bildet, um diese seitlich entlang der bogenförmigen Behältertransportstrecke zu führen. Ferner ist das Führungsband endlos umlaufend angetrieben und dazu ausgebildet, in Transportrichtung der Behälter wirkende Vorschubkräfte auf die Behälter aufzubringen. Damit wird der Behälter nicht nur einseitig durch das mit der Führungsvorrichtung zusammenwirkende Transportelement bewegt sondern es wirken an gegenüberliegenden Seiten Vorschubkräfte auf den Behälter.

Der wesentliche Vorteil der Behälterbehandlungsvorrichtung besteht darin, dass durch das Aufbringen von Vorschubkräften an einander gegenüberliegenden Seiten ein Verdrehen des Behälters um dessen Behälterhochachse wirksam vermieden wird. Dies ist insbesondere beim Verkleben von Behältern untereinander mittels Klebepunkten von entscheidendem Vorteil, da durch eine verdrehsichere Überleitung an die Gruppierungseinrichtung sichergestellt wird, dass die Klebepunkte an der gewünschten Stelle zu liegen kommen bzw. exakt aufeinandertreffen. Des Weiteren erfolgt durch das Antreiben des Führungsbandes eine aktive seitliche Führung, mittels der ein Reiben des Behälters beispielsweise an einem nicht bewegten Geländer bzw. einer sonstigen passiven seitlichen Führung und damit Beschädigungen an empfindlichen Behälteroberflächen, beispielsweise Etiketten, Bedruckungen etc. wirksam vermieden werden.

Erfindungsgemäß weist das Führungsband einen riemenartig ausgebildeten Basisbereich und einen davon abstehenden Anlagebereich auf. Der Anlagebereich steht dabei in Richtung des Bereichs, in dem die Behälter bewegt werden, seitlich gegenüber dem Basisbereich vor und bildet mit seiner dem Basisbereich gegenüberliegenden Vorderseite eine Anlagefläche für die Behälter.

Durch die gewählte Form des Führungsbands kann eine Führung des Führungsbands entlang des konkav gewölbten Führungsbereichs bei gleichzeitiger seitlicher Führung der Behälter mittels dieses Führungsbands erreicht werden. Gemäß einem Ausführungsbeispiel wird der Anlagebereich durch eine Vielzahl von blockartigen Anlageelementen gebildet, die entlang des schlaufenartigen Führungsbands verteilt vorgesehen sind und von dem Basisbereich seitlich abstehen. Die Vorderseiten der Anlageelemente bilden dabei jeweils Anlageflächen für die seitlich zu führenden Behälter. Durch die blockartigen Anlageelemente wird eine Strukturierung der Anlagefläche für die Behälter erreicht, so dass die Übertragung von Vorschubkräften auf die Behälter verbessert wird.

Gemäß einem Ausführungsbeispiel sind jeweils zwei zueinander benachbarte bzw. aufeinanderfolgende Anlageelemente beabstandet zueinander angeordnet. In anderen Worten sind die aufeinanderfolgenden Anlageelemente jeweils durch Einschnitte ohne Abstand, d.h. aneinander anliegend in einer nicht gekrümmten Ausrichtung, oder mit geringen Lücken voneinander getrennt. Dadurch wird erreicht, dass das Führungsband sowohl an den sehr engen Umlenkpunkten (konvexe Formung des Führungsbandes) als auch im Bereich des konkav geformten Führungsbereichs flexibel biegbar bzw. verformbar ist.

Bei Ausführungsformen mit großen Umlenkradien kann ein umlaufend einteiliges Anlageelement ohne die vorgenannten Einschnitte und/oder Lücken vorgesehen werden.

Gemäß einem Ausführungsbeispiel sind der Anlagebereich und der Basisbereich aus unterschiedlichen Materialien gebildet. Insbesondere ist der Anlagebereich aus einem weicheren Material gebildet als der Basisbereich. Der Anlagebereich ist vorzugsweise aus einem elastischen Polyurethan(PUR)-Werkstoff, insbesondere Sylomer® gebildet. Dadurch kann das Material des Basisbereichs und des Auflagebereichs für die jeweiligen Aufgaben, die diese Bereiche zu erfüllen haben, geeignet gewählt werden.

Erfindungsgemäß steht der Basisbereich oberseitig und/oder unterseitig gegenüber dem Anlagebereich über, um einen Führungsrand zu bilden. Mittels dieses Führungsrandes lässt sich das Führungsband geeignet entlang des konkav gewölbten Führungsbereichs führen, beispielsweise mittels einer Gleitführung o.ä..

Gemäß einem Ausführungsbeispiel sind eine oder mehrere Führungsklammern vorgesehen, die zumindest abschnittsweise den Führungsrand umgreifen. Die Führungsklammern weisen vorzugsweise eine Führungsnut auf, die derart dimensioniert ist, dass der Führungsrand des Führungsbandes in die Führungsnut einbringbar ist, um eine Gleitführung zu bilden. Damit kann das Führungsband unabhängig von dem Vorhandensein von zu fördernden Behältern lagestabil entlang des konkav gewölbten Führungsbereichs geführt werden.

Gemäß einem Ausführungsbeispiel sind die Führungsklammern paarweise vorgesehen sind, wobei eine erste Führungsklammer des Führungsklammerpaares einen oberen Führungsrand und eine zweite Führungsklammer des Führungsklammerpaares einen unterseitigen Führungsrand umgreifen. Durch die oberseitige und unterseitige Führungsklammer lässt sich die Führung des Führungsbandes weiterhin verbessern.

Gemäß einem Ausführungsbeispiel sind an dem konkav gewölbten Führungsbereich zumindest zwei Paare von Führungsklammern vorgesehen. Durch das Vorsehen mehrerer Führungsklammern entlang des Führungsbereichs kann eine flexiblere Anpassung der Vorrichtung an mit der Vorrichtung zusammenwirkende Transportelemente erreicht werden.

Gemäß einem Ausführungsbeispiel sind Mittel zur Verstellung der Wölbung des konkav geformten Führungsbereichs vorgesehen. Dadurch kann der Führungsbereich der Vorrichtung an unterschiedliche Kurvenkonturen und/oder Wölbungsradien aufweisende, mit der Vorrichtung zusammenwirkende Transportelemente angepasst werden.

Gemäß einem Ausführungsbeispiel sind die Führungsklammern in einer Richtung quer zur Transportrichtung verstellbar, um die Wölbung des Führungsbereichs zu verstellen. Beispielsweise kann eine Verstellmechanik, insbesondere eine einen Exzenter aufweisende Verstellmechanik, vorgesehen sein, wobei die Verstellmechanik dazu ausgebildet ist, die Führungsklammern quer zur Bewegungsrichtung des Führungsbandes zu verfahren und damit den Wölbungsradius bzw. den Abstand des Führungsbandes zum gegenüberliegenden Transportelement zu vergrößern bzw. zu verkleinern.

Gemäß einem Ausführungsbeispiel sind zwei konkav geformte Führungsbereiche vorgesehen sind, an denen jeweils ein oder mehrere Führungsbänder umlaufen, wobei die Führungsbereiche zur seitlichen Zusammenführung zweier Behälterströme ausgebildet sind. insbesondere sind die Behälterströme jeweils einspurige Behälterströme, so dass durch das Zusammenführen ein zweispuriger Behälterstrom erhalten wird. Dies ist insbesondere bei Behälterbehandlungsvorrichtungen von Vorteil, in denen zweireihige Behältergebinde gebildet werden. Damit kann mittels einer einzigen Vorrichtung gleichzeitig eine seitliche Führung von zwei voneinander getrennten Behälterströmen erreicht werden.

Gemäß einem weiteren Aspekt wird eine Behälterbehandlungsvorrichtung mit einer Behältertransportstrecke beschrieben, wobei an einem ersten Abschnitt der Behältertransportstrecke zumindest ein um eine vertikale Drehachse umlaufend angetriebenes Transportelement vorgesehen ist, mittels dem die Behälter auf einem bogenförmigen Transportweg bewegt werden, und wobei an einem zweiten Abschnitt der Behältertransportstrecke ein linear förderndes Transportelement vorgesehen ist. Im Übergangsbereich zwischen dem ersten Abschnitt und dem zweiten Abschnitt der Behältertransportstrecke ist eine Führungs-und Vorschubvorrichtung vorgesehen, die einen konkav geformten Führungsbereich aufweist. Die Führungs- und Vorschubvorrichtung umfasst ein Führungsband, das einen Anlagebereich für die Behälter in dem konkav geformten Führungsbereich bildet, um diese seitlich entlang einer bogenförmigen Behältertransportstrecke zu führen. Das Führungsband ist ferner endlos umlaufend angetrieben, um in Transportrichtung wirkende Vorschubkräfte auf den Behälter aufzubringen. Die Behälterbehandlungsvorrichtung ist insbesondere eine Vorrichtung zur Herstellung von Behältergebinden durch Verkleben der Behälter untereinander.

Gemäß einem Ausführungsbeispiel ist die Führungs- und Vorschubvorrichtung höhenverstellbar ausgebildet. Damit kann das Führungsband in unterschiedliche Höhen verfahren werden und damit an unterschiedliche Behälterformate bzw. Behälterhöhen angepasst werden.

Gemäß einem Ausführungsbeispiel ist die Behälterbehandlungsvorrichtung spiegelsymmetrisch aufgebaut, um Behälter in mehreren einspurigen Behälterströmen zu behandeln. Dabei ist auch die Führungs- und Vorschubvorrichtung spiegelsymmetrisch aufgebaut ist und zur Zusammenführung der Behälter mehrerer einspuriger Behälterströme ausgebildet. Damit lassen sich beispielsweise Behälter zu einem zweispurigen Behälterstrom lage- bzw. drehpositionsgenau zusammenführen.

Gemäß einem Ausführungsbeispiel wirkt die Führungs- und Vorschubvorrichtung mit einem oder mehreren dem zumindest einen Führungsband gegenüberliegenden Transportelementen zusammen, wobei das zumindest eine Transportelement synchron zum Führungsband angetrieben wird. Dabei werden durch das Führungsband auf einer ersten Seite und durch das zumindest eine Transportelement auf einer der ersten Seite gegenüberliegenden Seite Vorschubkräfte auf den Behälter aufgebracht. Durch die beidseitige Krafteinleitung kann ein unerwünschtes Drehen des Behälters um dessen Behälterhochachse verhindert werden.

Gemäß einem weiteren Aspekt wird ein Verfahren zur Führung von Behältern entlang einer bogenförmigen Behältertransportstrecke beschrieben.

Dabei werden die Behälter in einem konkav geformten Führungsbereich an einem endlos umlaufend angetriebenen Führungsband anliegend entlang der bogenförmigen Behältertransportstrecke geführt und mittels des Führungsbandes Vorschubkräfte auf die Behälter aufgebracht.

Unter Behälter im Sinne der Erfindung werden sämtliche Packmittel verstanden, insbesondere Flaschen, Dosen etc.

Unter dem Begriff "Führungsband" werden segmentierte und nicht-segmentierte Bänder, insbesondere auch Gliederbänder verstanden.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft eine Behälterbehandlungsmaschine umfassend mehrere Behandlungsmodule und einer daran anschließenden Behandlungseinheit in einer schematischen Draufsichtdarstellung;
- Fig. 2: beispielhaft ein weiteres Ausführungsbeispiel eines Übergangsbereichs zwischen einem Behandlungsmodul und einer daran anschließenden Behandlungseinheit einer Behälterbehandlungsmaschine in einer schematischen Draufsichtdarstellung;
- Fig. 3: beispielhaft ein erfindungsgemäßes Ausführungsbeispiel eines Übergangsbereichs zwischen einem Behandlungsmodul und einer daran anschließenden Behandlungseinheit einer Behälterbehandlungsmaschine in einer perspektivischen Darstellung;
- Fig. 4: beispielhaft eine erfindungsgemäße Führungs- und Vorschubvorrichtung in einer perspektivischen Darstellung;
- Fig. 5: beispielhaft die Führungs- und Vorschubvorrichtung gemäß Fig. 4 in einer perspektivischen Draufsichtdarstellung;
- Fig. 6: beispielhaft eine Schnittdarstellung der Führungs- und Vorschubvorrichtung aus Fig. 5 entlang der Schnittlinie A-A;
- Fig. 7: beispielhaft eine Schnittdarstellung der Führungs- und Vorschubvorrichtung aus Fig. 5 entlang der Schnittlinie B-B; und
- Fig. 8: beispielhaft ein Führungsband in einer perspektivischen Ansicht.

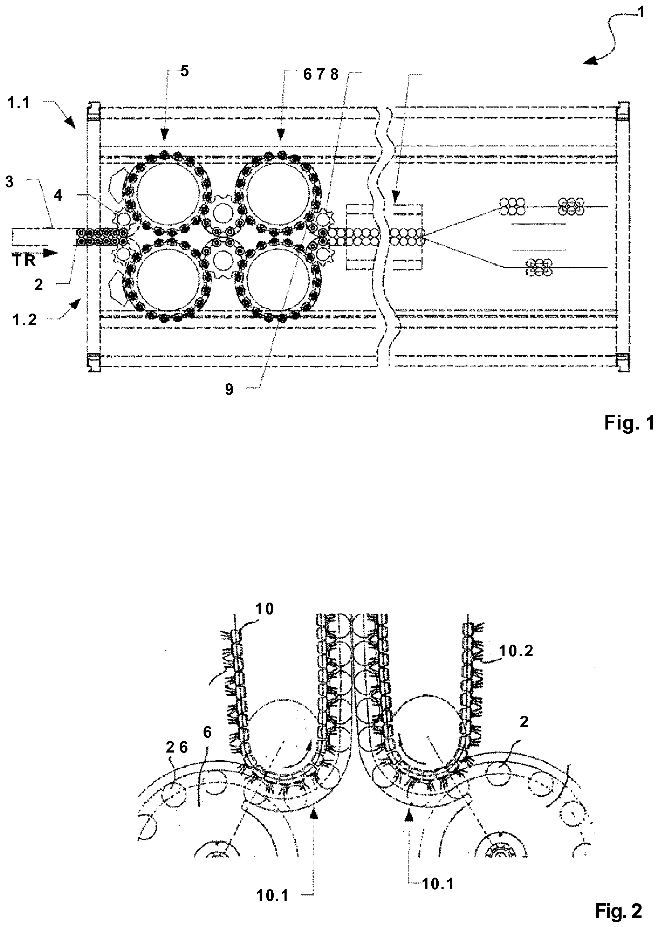

Figur 1 zeigt ein Ausführungsbeispiel einer Behälterbehandlungsvorrichtung 1. Beispielsweise handelt es sich bei der Behälterbehandlungsvorrichtung 1 um eine Vorrichtung zur Herstellung von mehrreihigen Gebinden aus Behältern 2 durch Verkleben der Behälter 2 untereinander. Jedoch ist die Erfindung keineswegs auf eine derartige Behälterbehandlungsvorrichtung 1 beschränkt, sondern lässt sich in einer Vielzahl von Behälterbehandlungsvorrichtungen 1 implementieren, bei denen eine seitliche Führung von in einer Transportrichtung bewegten Behältern 2 entlang einer bogenförmigen Behältertransportstrecke erforderlich ist. Die gezeigte Behälterbehandlungsvorrichtung 1 ist zur zeitgleichen Verarbeitung zweier einspuriger Behälterströme ausgebildet. Sie ist beispielsweise spiegelsymmetrisch oder im Wesentlichen spiegelsymmetrisch zu einer in Figur 1 horizontal verlaufenden Mittelebene ME ausgebildet und weist zwei gegenläufig arbeitende Verarbeitungsbereiche 1.1, 1.2 auf. Im Folgenden wird lediglich der Aufbau bzw. die Funktionsweise des ersten Verarbeitungsbereichs 1.1 beschrieben, wobei selbiges in analoger Weise für den zweiten Verarbeitungsbereich 1.2 gilt. Es versteht sich, dass die Erfindung auch in Behälterbehandlungsvorrichtungen 1 anwendbar ist, die lediglich zur Verarbeitung eines einzigen einreihigen Behälterstroms ausgebildet ist.

Die Behälter 2 werden beispielsweise stehend in einer Transportrichtung TR über einen Transporteur 3 einem Einlaufstern 4 zugeführt. An den Einlaufstern 4 in Transportrichtung TR anschließend sind eine oder mehrere Behälterbehandlungsmodule 5, 6 vorgesehen, die jeweils ein um eine vertikale Achse rotativ angetriebenes Transportelement, beispielsweise einen Rotor umfassen. Beispielsweise kann ein erstes Behälterbehandlungsmodul 5 ein Ausrichtmodul sein, bei dem die Behälter nach einem Behältermerkmal ausgerichtet werden, und das zweite Behälterbehandlungsmodul 6 kann ein Verschließmodul sein, in dem die noch offenen Behälter 2 verschlossen werden. Alternativ kann das zweite Behälterbehandlungsmodul 6 ein Modul sein, durch das ein Klebemittelauftrag auf die Behälteraußenfläche erfolgt, um nachfolgend Gruppen von Behältern 2 durch Klebeverbindungen miteinander zu verbinden und dadurch Behältergebinde zu bilden. Die Behälter 2 werden durch das zweite Behälterbehandlungsmodul 6 dem Auslaufstern 7 zugeführt, der die Behälter 2 an eine weitere Behandlungseinheit 8 weiterleitet. Die Behandlungseinheit 8 ist beispielsweise eine Gruppierungseinrichtung, in der Behältergebinde umfassend zumindest zwei Behälterreihen gebildet werden. In der Behandlungseinheit 8 erfolgt dabei vorzugsweise ein linearer Transport der Behälter 2, beispielsweise durch ein Förderband oder eine Förderkette, wohingegen die Behälter 2 im Bereich der Behandlungsmodule 5, 6 auf einer zumindest abschnittsweise bogenförmigen Behältertransportstrecke, insbesondere eine mehrfach umgelenkten Behältertransportstrecke bewegt werden.

Die Übergabe der Behälter 2 von der bogenförmigen Behältertransportstrecke im Bereich des Behandlungsmoduls 6 zur linearen Behältertransportstrecke im Bereich der Behandlungseinheit 8 kann auf unterschiedliche Weise erfolgen. In dem Ausführungsbeispiel gemäß Figur 1 ist ein Auslaufstern 7 mit mehreren umfangsseitig verteilt vorgesehenen Ausnehmungen, auch Behältertaschen genannt, vorgesehen, wobei die von dem Behandlungsmodul 6 zur Behandlungseinheit 8 zu transportierenden Behälter 2 zumindest abschnittsweise jeweils in einer Ausnehmung aufgenommen durch Rotation des Auslaufsterns 7 weiterbewegt und dadurch der Behandlungseinheit 8 zugeführt werden. Um ein radiales Ausweichen der Behälter 2 aus den Ausnehmungen heraus zu vermeiden, ist in bekannten Vorrichtungen abschnittsweise um den Auslaufstern 7 herum eine Behälterführung in Form eines Geländers 9 vorgesehen. Die Behälter 2 werden an diesem Geländer 9 gleitend radial geführt. Dabei wird die Bewegungsrichtung der Behälter 2 beispielsweise in einem Bereich zwischen 90° und 130° verändert und die Behälter 2 werden damit der linearen Transportstrecke im Bereich der Behandlungseinheit 8 geeignet zugeführt.

Figur 2 zeigt ein weiteres Ausführungsbeispiel des Übergabebereichs zwischen dem Behandlungsmodul 6 und der Behandlungseinheit 8. In diesem Ausführungsbeispiel werden die Behälter 2 von dem Behandlungsmodul 6 direkt an ein umlaufend angetriebenes Transportband 10 übergeben, und zwar in einem Umlenkbereich 10.1 desselben. In anderen Worten übernimmt der Umlenkbereich 10.1 des Transportbandes 10 die Überleitung der Behälter 2 zu der linearen Transportstrecke vergleichbar dem zuvor beschriebenen Auslaufstern 7. Mittels des Transportbands 10 erfolgt anschließend vorzugsweise auch der lineare Weitertransport der Behälter 2 durch die Behandlungseinheit 8.

Das Transportband 10 weist quer zur Transportrichtung der Behälter 2 und quer zur Behälterhochachse des jeweiligen Behälters 2 vom Transportband 10 abstehende, flexible Finger 10.2 auf, die als Mitnehmer für die Behälter 2 fungieren. Dadurch erfolgt mittels des Umlenkbereichs 10.1 des Transportbands 10 eine Zuführung der Behälter 2 von der bogenförmigen Behältertransportstrecke im Bereich des Behandlungsmoduls 6 zur linearen Behältertransportstrecke im Bereich der Behandlungseinheit 8, wobei die Finger 10.2 den Vorschub der Behälter 2 bewirken. Um ein radiales Ausweichen der Behälter 2 zu vermeiden, ist in bekannten Vorrichtungen wiederum ein Geländer 9 vorgesehen, so dass ein Wegbewegen der Behälter 2 von dem Transportband 10 und damit ein Lösen der Behälter 2 von den vom Transportband 2 abstehenden Fingern 10.2 wirksam vermieden wird.

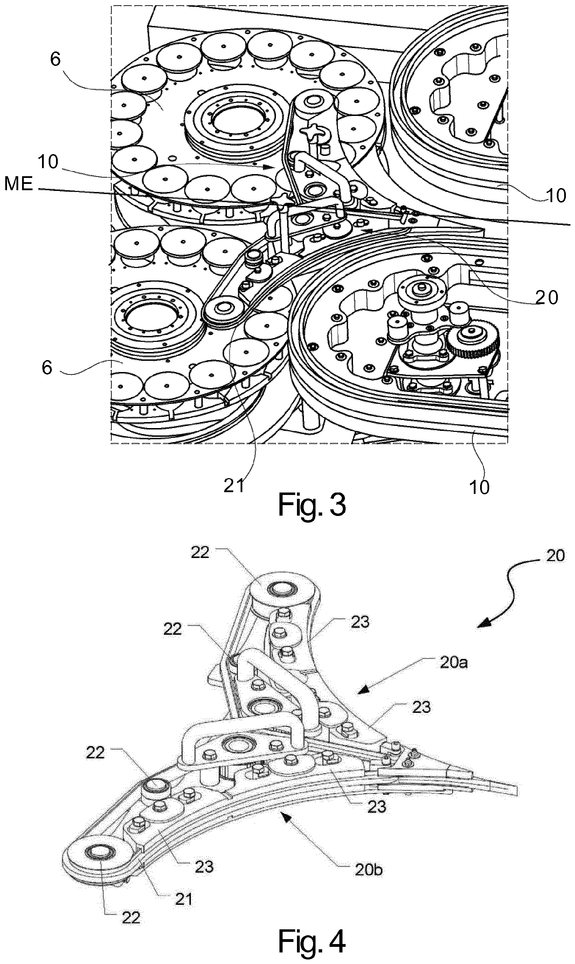

Figur 3 zeigt ein erfindungsgemäßes Ausführungsbeispiel des Übergabebereichs zwischen dem Behandlungsmodul 6 und der Behandlungseinheit 8. Im Übergabebereich zwischen dem Transportelement des Behandlungsmoduls 6 und dem Transportband 10 ist eine Führungs- und Vorschubvorrichtung 20 vorgesehen, mittels der neben einer seitlichen Führung der Behälter 2 auch Vorschubkräfte auf den Behälter 2 übertragen werden. Das Transportband 10 kann wie in Figur 2 beschrieben ausgebildet sein. Alternativ kann anstelle des Transportbandes 10 ein Auslaufstern 7 vorgesehen sein, der mit der Führungs- und Vorschubvorrichtung 20 zusammenwirkt.

Die Führungs- und Vorschubvorrichtung 20 ist vorzugsweise spiegelsymmetrisch zur Mittelebene ME ausgebildet, um eine Zuführung der im ersten und zweiten Verarbeitungsbereich 1.1, 1.2 geförderten Behälter 2 zu der Behandlungseinheit 8 zu bewirken. Eine erste Hälfte der Führungs- und Vorschubvorrichtung 20 wirkt dabei mit dem Behandlungsmodul 6 des ersten Verarbeitungsbereichs 1.1 und eine zweite Hälfte der Führungs- und Vorschubvorrichtung 20 wirkt mit dem Behandlungsmodul 6 des zweiten Verarbeitungsbereichs 1.2 zusammen. Die Führungs- und Vorschubvorrichtung 20 wird nachfolgend lediglich in Bezug auf eine Hälfte beschrieben. Es versteht sich, dass diese Beschreibung in analoger Weise auch auf die zweite Hälfte der Führungs- und Vorschubvorrichtung 20 übertragbar ist.

Die Führungs- und Vorschubvorrichtung 20 weist zumindest einen konkav geformten Führungsbereich 20a, 20b auf, mittels dem die seitliche Führung der Behälter 2 erfolgt. Die seitliche Führung erfolgt insbesondere mittels eines Führungsbandes 21, das umlaufend angetrieben ist und entlang des konkav geformten Führungsbereichs 20a, 20b bewegt wird. Dabei ist das Führungsband 21 derart ausgebildet, dass durch dieses Führungsband 21 Vorschubkräfte auf den Behälter 2 ausgeübt werden. Das Führungsband 21 ist vorzugsweise derart angetrieben, dass es synchron mit einem dem Führungsbereich 20a, 20b gegenüberliegenden Transportelement, beispielsweise dem Transportband 10, dem Auslaufstern 7 o.ä. angetrieben ist. Unter "synchron" wird insbesondere verstanden, dass die Bewegungsgeschwindigkeit des Führungsbands 21 derart an die Bewegungsgeschwindigkeit des dem Führungsband 21 gegenüberliegenden Transportelement angepasst ist, dass kein Verdrehen des Behälters 2 um dessen Behälterhochachse erfolgt.

Fig. 4 bis 7 zeigen die Führungs- und Vorschubvorrichtung 20 in unterschiedlichen Darstellungen und mehr im Detail. Jede Hälfte der Führungs- und Vorschubvorrichtung 20 weist jeweils ein schlaufenartig ausgebildetes Führungsband 21 auf, das beispielsweise als Riemen oder aber auch als mehrgliedriges Band ausgebildet sein kann. Entlang des Förderweges des Führungsbandes 21 sind mehrere Umlenkrollen 22 vorgesehen, die eine geeignete Umlenkung bzw. vertikale Führung des Führungsbandes 21 bewirken. Zudem kann eine Spannvorrichtung vorgesehen sein, mittels der eine gewünschte Spannung des Führungsbandes 21 erreicht wird. Die Spannvorrichtung kann beispielsweise durch eine positionsverstellbare Spannrolle, insbesondere eine mit einer Federkraft beaufschlagte Spannrolle sein.

Der Antrieb des Führungsbandes 21 erfolgt mittels eines motorischen Antriebs, beispielsweise eines in seiner Drehzahl exakt regelbaren elektromotorischen Antriebs. Dadurch wird erreicht, dass das Führungsband 21 mit einer exakten Geschwindigkeit synchron zu einem mit diesem zusammenwirkenden Transportelement, beispielsweise dem Transportband 10 oder dem Auslaufstern 7 antreibbar ist.

Wie zuvor ausgeführt, ist der Führungsbereich 20a, 20b konkav gewölbt ausgebildet. Um eine Führung des Führungsbandes 21 entlang dieses konkav gewölbten Führungsbereichs 20a, 20b zu gewährleisten, und zwar unabhängig davon, ob Behälter 2 gegenüber dem Führungsband 21 anliegen, sind Führungsmittel vorgesehen. Die Führungsmittel sind dazu ausgebildet, eine Gleitführung für das Führungsband 21 zu bilden.

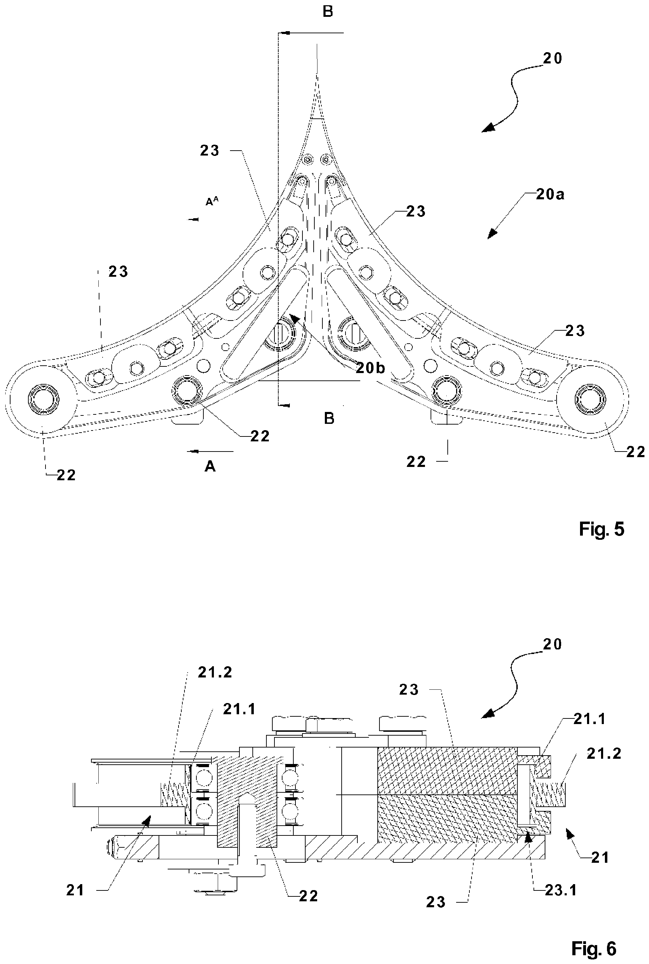

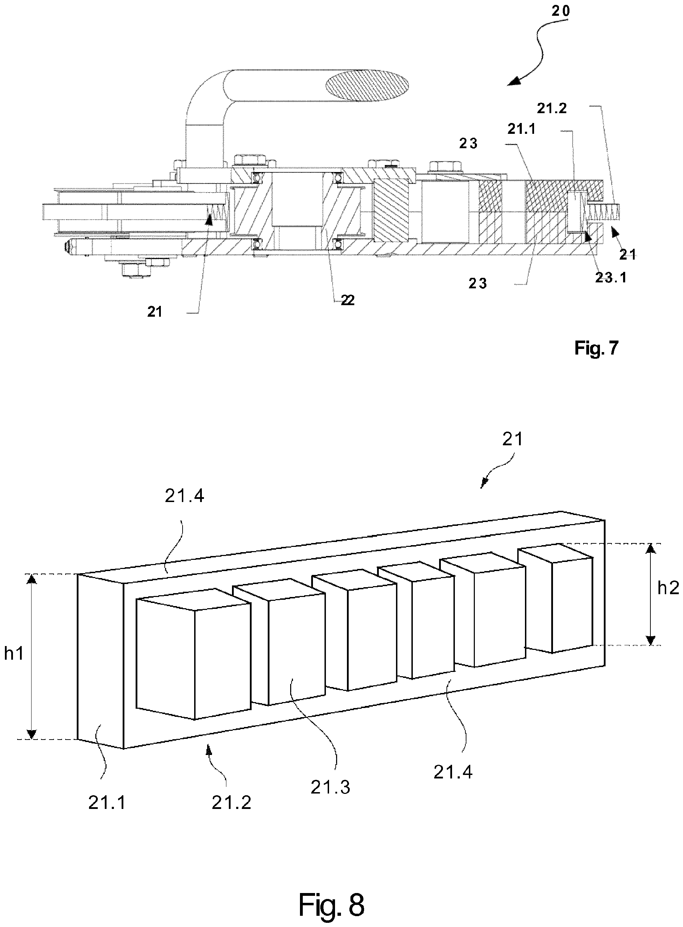

Die Führungsmittel werden insbesondere durch Führungsklammern 23 gebildet. Beispielsweise ist zumindest ein Paar von Führungsklammern 23 vorgesehen, wobei eine erste Führungsklammer 23 des Führungsklammerpaares das Führungsband 21 abschnittsweise oberseitig und eine zweite Führungsklammer 23 des Führungsklammerpaares das Führungsband 21 abschnittsweise unterseitig umgreift. Wie insbesondere aus den Schnittdarstellungen gemäß den Figuren 6 und 7 ersichtlich, weisen die Führungsklammern 23 beispielsweise eine Führungsnut 23.1 auf, die zur seitlichen Führung des Randes des Führungsbandes 21 ausgebildet ist. Diese Führungsnut 23.1 ist vorzugsweise ebenfalls gewölbt ausgebildet, so dass mittels der Führungsnut 23.1 das Führungsband 21 entlang dem konkav gewölbten Führungsbereich 20a, 20b geführt wird. Entlang des Führungsbereichs 20a, 20b können mehrere Paare von Führungsklammern 23 vorgesehen sein, um die gewünschte Führung des Führungsbandes 21 zu erreichen.

Bevorzugt sind die Führungsmittel, insbesondere die Führungsklammern 23 verstellbar ausgebildet, und zwar in einer Richtung quer zur Bewegungsrichtung des Führungsbandes 21. Die Verstellbarkeit kann insbesondere durch eine einen oder mehrere Exzenter aufweisende Verstellmechanik erreicht werden. Dadurch kann eine Anpassbarkeit des Wölbungsradius der Führungs- und Vorschubvorrichtung 20 an unterschiedliche Einsatzbereiche bzw. an unterschiedliche Radien des der Führungs- und Vorschubvorrichtung 20 gegenüberliegenden Transportelements (beispielsweise dem Transportband 10 oder dem Auslaufstern 7) erreicht werden.

Ferner kann die Führungs- und Vorschubvorrichtung 20 insgesamt verstellbar an der Behälterbehandlungsvorrichtung 1 vorgesehen sein. Zum einen kann die Führungs-und Vorschubvorrichtung 20 höhenverstellbar sein, beispielsweise um unterschiedlich hohe Behälterformate verarbeiten zu können. Alternativ oder zusätzlich kann die Führungs- und Vorschubvorrichtung 20 in einer Richtung parallel zur linearen Transportrichtung im Bereich der Behandlungseinheit 8 (wie durch den Doppelpfeil in Figur 3 angedeutet) verstellbar, insbesondere verschiebbar sein. Dadurch lässt sich die Lage der Führungs- und Vorschubvorrichtung 20 an unterschiedliche Behälterdurchmesser anpassen.

Figur 8 zeigt eine schematische Ausschnittdarstellung eines Führungsbandes 21. Das Führungsband 21 weist mehrere unterschiedlich geformte Bereiche auf, und zwar einen ersten Bereich, nachfolgend als Basisbereich 21.1 bezeichnet, und einen davon seitlich abstehenden Anlagebereich 21.2. Der Basisbereich 21.1 ist vorzugsweise schlaufenartig ausgebildet und bildet beispielsweise einen in sich geschlossenen Riemenbereich, mittels dem das Führungsband 21 gespannt werden kann und über den Antriebskräfte das Führungsband 21 einleitbar sind. Im gezeigten Ausführungsbeispiel weist der Basisbereich 21.1 einen rechteckförmigen oder im Wesentlichen rechteckförmigen Querschnitt auf. Alternativ kann der Basisbereich 21.1 im Querschnitt keilförmig bzw. konisch zulaufend ausgebildet sein.

Der Anlagebereich 21.2 wird im gezeigten Ausführungsbeispiel durch mehrere blockartige Anlageelemente 21.3 gebildet, die in einer oder mehreren Reihen in Transportrichtung hintereinander angeordnet sind. Insbesondere können die Anlageelemente 21.3 beabstandet bzw. auf Lücke zueinander angeordnet sein. Die Lücken können beispielsweise durch Einschnitte in dem Anlagebereich 21.3 gebildet sein. Dadurch wird erreicht, dass die Flexibilität des Führungsbandes 21 durch die Anlageelemente 21.3 bzw. den Anlagebereich 21.2 nicht oder nur unwesentlich eingeschränkt wird.

Vorzugsweise werden der Basisbereich 21.1 und der Anlagebereich 21.2 durch unterschiedliche Materialien gebildet. So kann beispielsweise der Basisbereich 21.1 durch ein härteres Material gebildet sein als der Anlagebereich 21.2. Der Basisbereich 21.1 kann beispielsweise aus einem Polyurethan-Material (PU) bestehen, wohingegen der Auflagenbereich 21.2 aus einem gemischtzelligen PUR-Elastomer (Polyetherurethan) insbesondere einem Sylomer® besteht. Damit können die jeweiligen Bereiche des Führungsbandes 21 an deren Aufgaben geeignet angepasst werden, nämlich der Basisbereich 21.1 an die Spannbarkeit des Führungsbandes 21 und Einleitung von Antriebskräften und der Anlagebereich 21.2 an eine möglichst behälterschonende Führung und Einleitung von Vorschubkräften auf die Behälter 2.

Wie in Figur 8 ersichtlich, ist die Höhe h1 des Basisbereichs 21.1 vorzugsweise größer als die Höhe h2 des Anlagebereichs 21.2. Dadurch wird oberseitig und unterseitig am Führungsband 21 ein Führungsrand 21.4 geschaffen. Dieser Führungsrand 21.4 ist vorzugsweise derart ausgebildet, dass dieser in die Führungsnut 23.1 der Führungsklammer 23 einführbar ist. In anderen Worten wird ein im Querschnitt T-förmiges Führungsband 21 geschaffen. Dadurch wird durch ein Zusammenwirken des Führungsrands 21.4 mit der Führungsnut 23.1 die Führung des Führungsbandes 21 entlang des konkav gewölbten Führungsbereichs 20a, 20b erreicht.

Zuvor wurden lediglich Führungs- und Vorschubvorrichtungen 20 mit zwei konkav geformten Führungsbereichen beschrieben (spiegelsymmetrisch ausgebildete Führungs- und Vorschubvorrichtung 20). Es versteht sich, dass auch eine Führungs-und Vorschubvorrichtung 20 mit lediglich einem einzigen konkav geformten Führungsbereich (nichtsymmetrische Ausbildung) zum Zusammenwirken mit einem einzigen umlaufend angetriebenen Transportelement (z.B. Auslaufstern 7 oder Transportband 10) vom Schutzbereich umfasst ist.

Die Erfindung wurde voranstehend an Ausführungsbeispielen beschrieben. Es versteht sich, dass wie beansprucht eine Vielzahl von Änderungen oder Abwandlungen möglich sind, ohne dass dadurch der der Erfindung zugrundeliegende Erfindungsgedanke verlassen wird.

### Bezugszeichenliste

- 1: Behälterbehandlungsvorrichtung
- 1.1, 1.2: Verarbeitungsbereich
- 2: Behälter
- 3: Transporteur
- 4: Einlaufstern
- 5,6: Behandlungsmodul
- 7: Auslaufstern
- 8: Behandlungseinheit
- 9: Geländer
- 10: Transportband
- 10.1: Umlenkbereich
- 10.2: Finger

- 20: Führungs- und Vorschubvorrichtung
- 20a, 20b: Führungsbereich
- 21: Führungsband
- 21.1: Basisbereich
- 21.2: Anlagebereich
- 21.3: Anlageelement
- 21.4: Führungsrand
- 22: Umlenkrolle
- 23: Führungsklammer
- 23.1: Führungsnut

- h1/h2: Höhe
- ME: Mittelebene
- TR: Transportrichtung

## Patentansprüche

1. Vorrichtung zur Führung von Behältern (2) entlang einer bogenförmigen Behältertransportstrecke, wobei
die Vorrichtung einen konkav geformten Führungsbereich (20a, 20b) aufweist, wobei ein Führungsband (21) vorgesehen ist, das einen Anlagebereich für die Behälter (2) im konkav geformten Führungsbereich (20a, 20b) bildet, um diese seitlich entlang der bogenförmigen Behältertransportstrecke zu führen und dass das Führungsband (21) endlos umlaufend angetrieben ist, um in Transportrichtung (TR) wirkende Vorschubkräfte auf die Behälter (2) aufzubringen, und wobei das Führungsband (21) einen riemenartig ausgebildeten Basisbereich (21.1) und einen davon abstehenden Anlagebereich (21.2) aufweist,
**dadurch gekennzeichnet, dass** der Basisbereich (21.1) oberseitig und/oder unterseitig gegenüber dem Anlagebereich (21.2) übersteht, um einen Führungsrand (21.4) zu bilden.

2. Vorrichtung nach Anspruch 1, **dadurch gekennzeichnet, dass** der Anlagebereich (21.2) durch eine Vielzahl von blockartigen Anlageelementen (21.3) gebildet wird, die entlang des schlaufenartigen Führungsbands (21) vorgesehen sind und von dem Basisbereich (21.1) abstehen.

3. Vorrichtung nach Anspruch 2, **dadurch gekennzeichnet, dass** jeweils zwei zueinander benachbarte Anlageelemente (21.3) beabstandet zueinander angeordnet sind.

4. Vorrichtung nach einem der vorherigen Ansprüche, **dadurch gekennzeichnet, dass** der Anlagebereich (21.2) aus einem weicheren Material gebildet ist als der Basisbereich (21.1), insbesondere aus einem elastischen Polyurethan(PUR)-Werkstoff.

5. Vorrichtung nach Anspruch 4, **dadurch gekennzeichnet, dass** eine oder mehrere Führungsklammern (23) vorgesehen sind, die zumindest abschnittsweise den Führungsrand (21.4) umgreifen.

6. Vorrichtung nach Anspruch 5, **dadurch gekennzeichnet, dass** die Führungsklammern (23) paarweise vorgesehen sind, wobei eine erste Führungsklammer (23) des Führungsklammerpaares oberseitig einen oberen Führungsrand (21.4) und eine zweite Führungsklammer (23) des Führungsklammerpaares unterseitig einen unterseitigen Führungsrand (21.4) umgreifen.

7. Vorrichtung nach Anspruch 5 oder 6, **dadurch gekennzeichnet, dass** zumindest zwei Paare von Führungsklammern (23) vorgesehen sind.

8. Vorrichtung nach einem der vorhergehenden Ansprüche, **dadurch gekennzeichnet, dass** Mittel zur Verstellung der Wölbung des konkav geformten Führungsbereichs (20a, 20b) vorgesehen sind.

9. Vorrichtung nach Anspruch 8, **dadurch gekennzeichnet, dass** die Führungsklammern (23) in einer Richtung quer zur Transportrichtung verstellbar sind, um die Wölbung des Führungsbereichs (20a, 20b) zu verstellen.

10. Vorrichtung nach einem der vorhergehenden Ansprüche, **dadurch gekennzeichnet, dass** zwei konkav geformte Führungsbereiche (20a, 20b) vorgesehen sind, an denen jeweils ein oder mehrere Führungsbänder (21) umlaufen, wobei die Führungsbereiche (20a, 20b) zur seitlichen Zusammenführung zweier Behälterströme ausgebildet sind.

## Claims

1. Device for guiding containers (2) along an arcuate container transport path, wherein
the device has a concavely shaped guide region (20a, 20b), wherein a guide belt (21) is provided, which forms a resting region for the containers (2) in the concavely shaped guide region (20a, 20b), in order to guide these laterally along the arcuate container transport path, and that the guide belt (21) is driven such as to rotate endlessly, in order to apply feed forces to the containers (2) in the transporting direction (TR), and wherein the guide belt (21) comprises a base region (21.1) configured in the form of a belt, and a contact region (21.2) projecting from this,
**characterised in that**
the base region (21.1) projects on the upper side and/or the under side in relation to the contact region (21.2), in order to form a guide edge (21.4).

2. Device according to claim 1, **characterised in that** the contact region (21.2) is formed by a plurality of block-type contact elements (21.3), which are provided along the loop-type guide belt (21), and which project from the base region (21.1).

3. Device according to claim 2, **characterised in that** in each case two adjacent contact elements (21.3) are arranged at a distance interval from one another.

4. Device according to any one of the preceding claims, **characterised in that** the contact region (21.2) is formed from a softer material than the base region (21.1), in particular from an elastic polyurethane (PUR) material.

5. Device according to claim 4, **characterised in that** one or more guide clamps (23) are provided, which at least in sections engage around the guide edge (21.4).

6. Device according to claim 5, **characterised in that** the guide clamps (23) are provided in pairs, wherein a first guide clamp (23) of the pair of guide clamps engages on the upper side around an upper guide edge (21.4), and a second guide clamp (23) of the pair of guide clamps engages on the under side around an underside guide edge (21.4).

7. Device according to claim 5 or 6, **characterised in that** at least two pairs of guide clamps (23) are provided.

8. Device according to any one of the preceding claims, **characterised in that** means are provided for adjusting the camber of the concave shaped guide region (20a, 20b).

9. Device according to claim 8, **characterised in that** the guide clamps (23) can be adjusted in a direction transverse to the transport direction, in order to adjust the camber of the guide region (20a, 20b).

10. Device according to any one of preceding claims, **characterised in that** two concave shaped guide regions (20a, 20b) are provided, at which in each case one or more guide belts (21) circulate, wherein the guide regions (20a, 20b) are configured for the lateral merging of two container flows.

## Revendications

1. Dispositif servant à guider des contenants (2) le long d'une ligne de transport de contenants en forme d'arc, dans lequel
le dispositif présente une zone de guidage (20a, 20b) formée de manière concave, dans lequel est prévue une bande de guidage (21), qui forme une zone d'appui pour les contenants (2) dans la zone de guidage (20a, 20b) formée de manière concave pour guider ceux-ci latéralement le long de la ligne de transport de contenants en forme d'arc et que la bande de guidage (21) est entraînée en rotation sans fin pour appliquer des forces d'avancement agissant dans la direction de transport (TR) sur les contenants (2), et dans lequel la bande de guidage (21) présente une zone de base (21.1) réalisée à la manière d'une courroie et une zone d'appui (21.2) dépassant de celle-ci,
**caractérisé en ce que**
la zone de base (21.1) fait saillie côté supérieur et/ou côté inférieur par rapport à la zone d'appui (21.2) pour former un bord de guidage (21.4).

2. Dispositif selon la revendication 1, **caractérisé en ce que** la zone d'appui (21.2) est formée par une pluralité d'éléments d'appui (21.3) de type bloc, qui sont prévus le long de la bande de guidage (21) de type boucle et dépassent de la zone de base (21.1).

3. Dispositif selon la revendication 2, **caractérisé en ce que** respectivement deux éléments d'appui (21.3) adjacents l'un par rapport à l'autre sont disposés à distance l'un par rapport à l'autre.

4. Dispositif selon l'une quelconque des revendications précédentes, **caractérisé en ce que** la zone d'appui (21.2) est formée à partir d'un matériau plus mou que la zone de base (21.1), en particulier à partir d'un matériau à base de polyuréthane (PUR) élastique.

5. Dispositif selon la revendication 4, **caractérisé en ce que** sont prévues une ou plusieurs brides de guidage (23), qui saisissent en périphérie au moins par endroits le bord de guidage (21.4).

6. Dispositif selon la revendication 5, **caractérisé en ce que** les brides de guidage (23) sont prévues par paire, dans lequel une première bride de guidage (23) de la paire de brides de guidage saisit en périphérie côté supérieur un bord de guidage supérieur (21.4) et une seconde bride de guidage (23) de la paire de brides de guidage saisit en périphérie côté inférieur un bord de guidage côté inférieur (21.4).

7. Dispositif selon la revendication 5 ou 6, **caractérisé en ce que** sont prévues au moins deux paires de brides de guidage (23).

8. Dispositif selon l'une quelconque des revendications précédentes, **caractérisé en ce que** sont prévus des moyens servant à ajuster la courbure de la zone de guidage (20a, 20b) formée de manière concave.

9. Dispositif selon la revendication 8, **caractérisé en ce que** les brides de guidage (23) peuvent être ajustées dans une direction de manière transversale par rapport à la direction de transport pour ajuster la courbure de la zone de guidage (20a, 20b).

10. Dispositif selon l'une quelconque des revendications précédentes, **caractérisé en ce que** sont prévues deux zones de guidage (20a, 20b) formées de manière concave, au niveau desquelles circulent en périphérie respectivement une ou plusieurs bandes de guidage (21), dans lequel les zones de guidage (20a, 20b) sont réalisées pour regrouper latéralement deux flux de contenants.
